(19) Europäisches Patentamt
European Patent Office
Office européen des brevets

(11) Publication number: 0 142 929
B1

(12) # EUROPEAN PATENT SPECIFICATION

(45) Date of publication of patent specification: 07.06.89

(51) Int. Cl.$^4$: C 02 F 5/08, C 02 F 5/10

(21) Application number: 84306786.9

(22) Date of filing: 05.10.84

(54) **Water soluble polymers and methods of use thereof.**

(30) Priority: 26.10.83 US 545563
20.03.84 US 591643

(43) Date of publication of application:
29.05.85 Bulletin 85/22

(45) Publication of the grant of the patent:
07.06.89 Bulletin 89/23

(84) Designated Contracting States:
BE DE FR GB IT NL

(56) References cited:
US-A-4 500 693

(73) Proprietor: BETZ EUROPE, INC.
4636 Somerton Road
Trevose Pennsylvania 19047 (US)

(72) Inventor: Chen, Fu
19 Meadow View Drive
Newtown Pennsylvania 18940 (US)

(74) Representative: Gore, Peter Manson et al
W.P. THOMPSON & CO. Coopers Building
Church Street
Liverpool L1 3AB (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 142 929 B1

Courier Press, Leamington Spa, England.

**Description**

The present invention pertains to a composition and method of utilization of same to inhibit corrosion and control the formation and deposition of scale imparting compounds in water systems such as cooling and gas scrubbing systems.

The problems of corrosion and scale formation and attendant effects have troubled water systems for years. For instance, scale tends to accumulate on internal walls of various water systems and thereby materially lessens the operational efficiency of the system.

Corrosion, on the other hand, is a degradative electro-chemical reaction of a metal with its environment. Simply stated, it is the reversion of refined metals to their natural state. For example, iron ore is iron oxide. Iron oxide is refined into steel. When the steel corrodes, it forms iron oxide which, if unattended, may result in failure or destruction of the metal, causing the particular water system to be shut down until the necessary repairs can be made.

Due to the recent popularity of cooling water treatment programs using high levels of orthophosphate to promote passivation of the metal surfaces in contact with the system water, it has become critically important to control calcium phosphate crystallization so that relatively high levels of orthophosphate may be maintained in the system to achieve the desired passivation without resulting in fouling or impeding heat transfer functions which would normally be caused by calcium phosphate deposition. Additionally, in certain highly alkaline water systems, calcium phosphonate precipitation has become a problem when phosphonic acid compounds have been used as part of the treatment approach to inhibit calcium carbonate deposition.

In accordance with one embodiment of the present invention, it has been surprisingly discovered that water soluble copolymers, as shown in Formula I hereinafter, are effective in controlling the formation of calcium phosphate, and calcium phosphonate deposits and in inhibiting corrosion in various water systems. When the polymer is conjointly used with a water soluble orthophosphate compound, the metal surfaces in contact with the system water are passivated and therefore corrosion is inhibited without resulting in substantial deposition of scale thereon.

The water soluble copolymers used in the present invention have the structure:

FORMULA 1

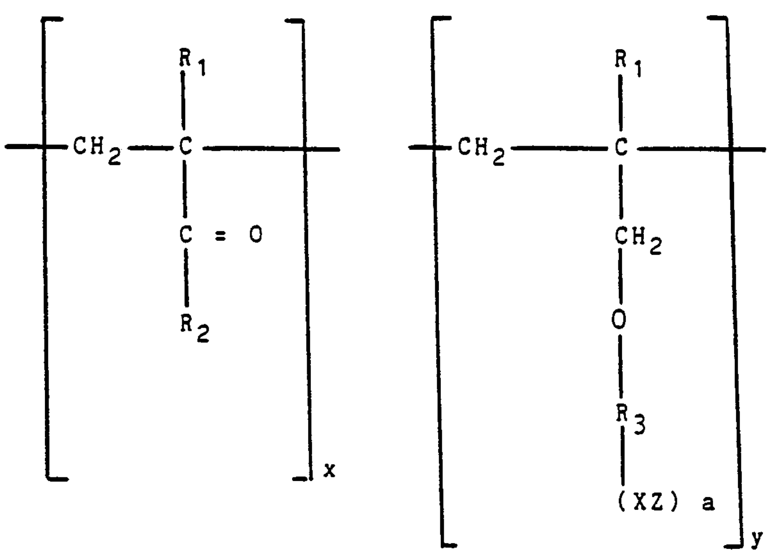

wherein x and y are integers, $R_1$ is H or lower alkal ($C_1$—$C_3$); $R_2$ is OH or OM, or $NH_2$; M is a water soluble cation; $R_3$ is a hydroxy substituted alkyl or alkylene radical having from 1 to 6 carbon atoms or a non-substituted alkyl or alkylene radical having from 1 to 6 carbon atoms; x, when present, is an anionic radical selected from $SO_3$, $PO_3$, $PO_4$, and COO; Z when present, is H or hydrogens or any water soluble cation or cations which together counterbalance the valence of the anionic radical; a is 0 or 1.

The number of average molecular weight of the water soluble copolymers of Formula I may fall within the range of 1,000 to 1,000,000. Preferably the number average molecular weight will be within the range of from about 1,500 to 500,000, with the range of about 1,500 to about 10,000 being even more highly desirable. The key criterion is that the polymer be water soluble.

The molar ratio x:y of the monomers of Formula I may fall within the range of from 30:1 to 1:20, with the x:y molar ratio range of from 10:1 to 1:5 being preferred.

At present, the water soluble polymer preferred for use in cooling water systems is:

FORMULA II

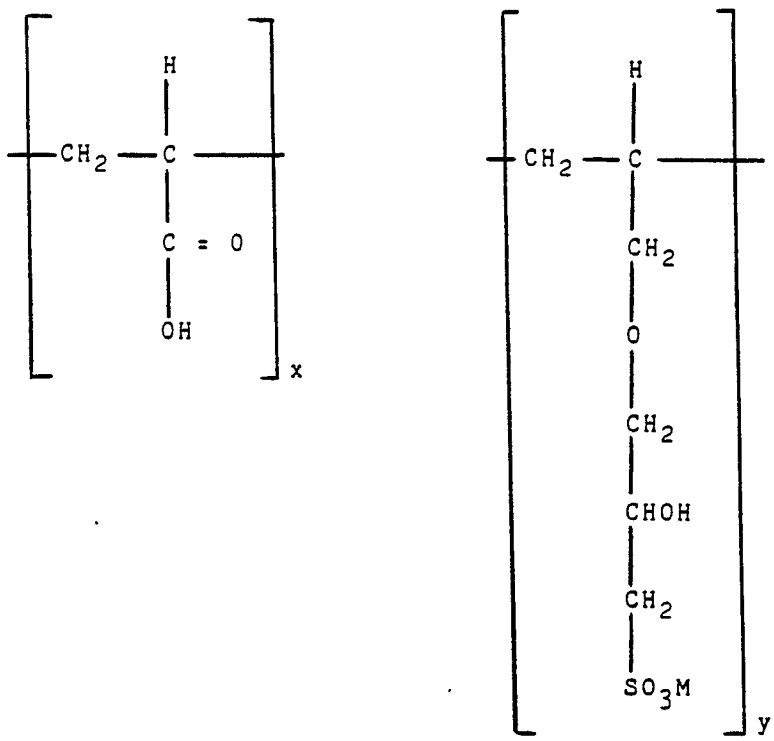

wherein M, X and Y are the same as given in Formula I. This polymer (Formula II) is referred to an acrylic acid/allyl hydroxy propyl sulfonate ether (AA/AHPSE). The IUPAC nomenclature for AHPSE is 1-propane sulfonic acid, 2-hydroxy-3-(2-propenyl oxy)-mono sodium salt.

With respect to both repeat units of the polymers of the present invention, they may exist in acid or water soluble salt form when used in the desired water system.

As to preparation of the monomer designated as x above, in Formula I, acrylic acid is well known. It may be produced by hydrolysis of acrylonitrile or via oxidation of acrolein. Other well known vinyl containing monomers such as methacrylic acid and acrylamide may also be utilized as monomer x of Formula I in accordance with the invention.

Turning to the allyl containing monomer, monomer y, in the Formula I above, these may be produced by reacting allyl alcohol with a non-tertiary alcohol in the temperature range of about 25—150°C as is detailed in U.S. Patent 2,847,477 followed by, if desired, sulfonation, phosphorylation, phosphonation or carboxylation of the monomer via well-known techniques.

The preferred allyl hydroxy propyl sulfonate ether monomers (monomer y Formula II) may conveniently be prepared via a ring opening reaction of the epoxy group of an allyl glycidyl ether precursor. Sulfonation of the epoxy group with sodium sulfite in the presence of a phase transfer catalyst such as tetra-n-butylammonium bisulfite or with fuming sulfonic acid containing sulfur trioxide will produce the sulfonic acid group and hydroxy group of the AHPSE. The resulting monomer can be further neutralized with caustic or other basic material. The reaction is illustrated by the following mechanism:

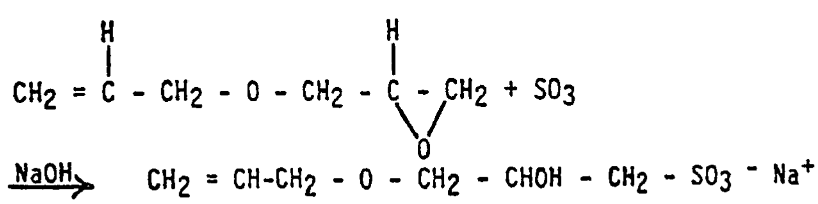

Similar ring opening reactions can be carried out by using phosphorous acid and its derivatives including phosphorous trichloride to obtain the phosphonic acid substituents.

If orthophosphoric acid ($H_3PO_4$) and its derivatives are used in the ring opening reaction, phosphoric acid ester substituents may be formed in accordance with the mechanism:

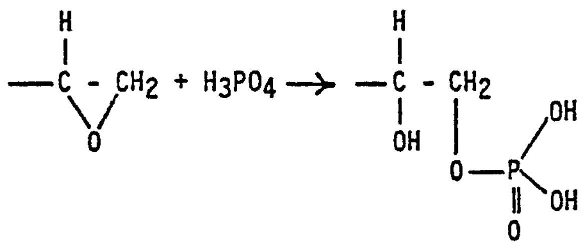

Such reaction is described in U.S. Patent 2,723,971.

Carboxylate functions can be provided on the allyl hydroxy propyl ether monomer via the reaction of allyl alcohol and chlorohydroxy butanoic acid according to the mechanism:

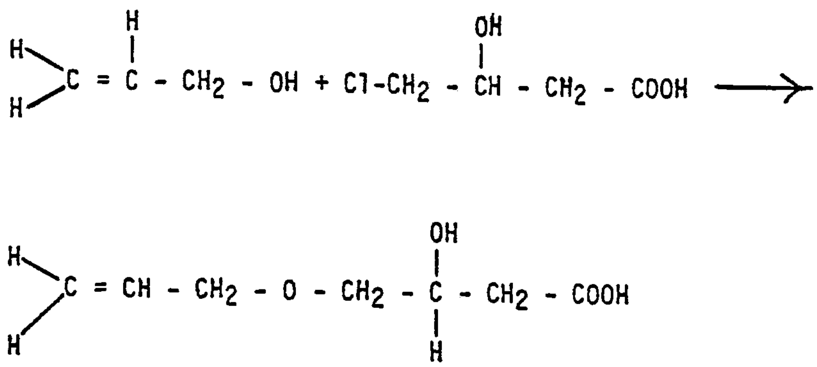

It should be noted that the monomer y (Formula I) may itself be allyl glycidyl ether which is commercially available from several sources.

Z in the allyl monomer, (monomer y of Formula I) if present, may be hydrogen, hydrogens or any soluble cation or cations which together counterbalance the valence of the anionic moiety X. Suitable cations include Na, $NH_4^+$. Ca, and K. X, when present, may be chosen from the group consisting of $SO_3$, $PO_3$, $PO_4$, and COO.

After the desired monomers have been obtained, free radical chain addition polymerization may proceed in accordance with conventional solution polymerization techniques. Polymerization initiators such as persulfate initiators, peroxide initiators, etc. may be used. Preferably the requisite monomers are mixed with water and alcohol (preferably isopropanol). The resulting polymer may be isolated by well-known methods such as distillation, etc. or the polymer may simply be used in its aqueous solution.

It should be mentioned that water soluble terpolymers comprising monomers x and y of Formulae I and II may also be prepared for use as deposit control agents and/or corrosion control agents and are fully covered and described herein by use of the term "copolymer." For instance, AHPSE monomers may be incorporated into a water soluble terpolymer backbone having other repeat units including acrylic acid monomers, alkyl acrylate monomers, hydroxylated lower alkyl acrylate ($C_1$—$C_6$) monomers, methacrylic acid monomers, acrylamide monomers, etc. Such terpolymers may have a molar ratio of from about 30:1 to 1:20 non-monomer y to monomer y repeat units (see Formula I).

The polymers should be added to the aqueous system, for which corrosion inhibiting, and/or deposit control activity is desired, in an amount effective for the purpose. This amount will vary depending upon the particular system for which treatment is desired and will be influenced by factors such as, the area subject to corrosion, pH, temperature, water quantity and the respective concentrations in the water of the potential scale and deposit forming species. For the most part, the polymers will be effective when used at levels of about 0.1—500 parts per million parts of water, and preferably from about 1.0 to 100 parts per million of water contained in the aqueous system to be treated. The polymers may be added directly into the desired water system in a fixed quantity and in the state of an aqueous solution, continuously or intermittently.

The polymers of the present invention are not limited to use in any specific category of water system. For instance, in addition to cooling water systems, the polymers may also be effectively utilized in scrubber systems and the like wherein corrosion and/or the formation and deposition of calcium phosphate and/or calcium phosphonate scale may be a problem.

The water soluble polymers of the present invention can also be used with topping agent components in order to enhance the corrosion inhibition and scale controlling properties thereof. For instance the

polymers may be used in combination with one or more kinds of compounds selected from the group consisting of inorganic phosphoric acids, phosphonic acid salts, organic phosphoric acid ester, and polyvalent metal salts. Such topping agents may be added to the system in an amount of from about 1 to 500 ppm.

Examples of such inorganic phosphoric acids include condensed phosphoric acids and water soluble salts thereof. The phosphoric acids include an orthophosphoric acid, a primary phosphoric acid and a secondary phosphoric acid. Inorganic condensed phosphoric acids include polyphosphoric acids such as pyrophosphoric acid, tripolyphosphoric acid and the like, metaphosphoric acids such as trimetaphosphoric acid and tetrametaphosphoric acid.

As to the other phosphonic acid derivatives which are to be added in addition to the polymers of the present invention, there may be mentioned aminopolyphosphonic acids such as aminotrimethylene phosphonic acid, ethylene diaminetetramethylene phosphonic acid and the like, methylene diphosphonic acid, hydroxyethylidene diphosphonic acid, 2-phosphonobutane 1,2,4, tricarboxylic acid, etc.

Exemplary organic phosphoric acid esters which may be combined with the polymers of the present invention include phosphoric acid esters of alkyl alcohols such as methyl phosphoric acid ester, ethyl phosphoric acid ester, etc., phosphoric acid ester of methyl cellosolve and ethyl cellosolve, and phosphoric acid esters of polyoxyalkylated polyhydroxy compounds obtained by adding ethylene oxide to polyhydroxy compounds such as glycerol, mannitol, sorbitol, etc. Other suitable organic phosphoric esters are the phosphoric acid esters, of amino alcohols such as mono, di and tri-ethanol amines.

Inorganic phosphoric acid, phosphonic acid, and organic phosphoric acid esters may be salts, preferably salts of alkali metal, ammonia, amine and so forth.

Exemplary polyvalent metal salts which may be combined with the water soluble polymers of the invention include those capable of dissociating polyvalent metal cations in water such as $Zn^{++}$, $Ni^{++}$, etc., which include zinc chloride, zinc sulfate, nickel sulfate, nickel chloride and so forth.

The water soluble polymers of the present invention may also be used in conjunction with water soluble chromate compounds that are adapted to provide chromate radicals in water solutions. Illustrative water soluble chromate compounds include sodium chromate dihydrate, sodium chromate anhydrous, sodium chromate tetrahydrate, sodium chromate hexahydrate, sodium chromate decahydrate, potassium dichromate, potassium chromate, ammonium dichromate and chromic acid.

In addition, water soluble azole compounds can be used in combination with the water soluble polymers herein disclosed. Such azoles have the formula

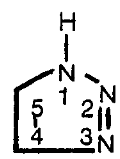

Included within the scope of the invention are N-alkyl substituted 1,2,3-triazole, or a substituted water soluble 1,2,3-triazole where substitution occurs at the 4 and/or 5 position of the ring. The preferred 1,2,3-triazole is 1,2,3-tolyltriazole of the formula

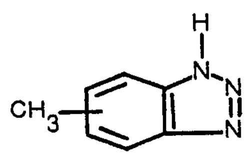

Other exemplary 1,2,3-triazoles include benzotriazole, 4-phenol-1,2,3-triazole, 4-methyl-1,2,3-triazole, 4-ethyl-1,2,3,triazole, 5 methyl-1,2,3-triazole, 5-ethyl-1,2,3-triazole, 5-propyl-1,2,3-triazole, and 5-butyl-1,2,3-triazole. Alkali metal or ammonium salts of these compounds may be used.

Other azole compounds include thiazole compounds of the formula:

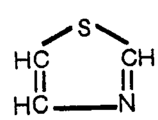

Suitable thiazoles include thiazole, 2 mercaptothiazole, 2-mercapto-benzothiazole, benzothiazole and the like.

The water soluble polymers may also be used in conjunction with molybdates such as, inter alia, sodium molybdate, potassium molybdate, lithium molybdate, ammonium molybdate, etc.

When the water soluble polymer of the invention (Formula I) is added to the aqueous system in combination with a topping agent component selected from the group consisting of inorganic phosphoric acids, phosphonic acids, organic phosphoric acids esters, their water-soluble salts (all being referred to hereinafter as phosphoric compounds), polyvalent metal salts, chromates, molybdates, and azoles, a fixed quantity of said polymer may be added separately and in the state of aqueous solution into the system. The

water soluble polymers may be added either continuously or intermittently. Alternatively, the polymer may be blended with the above noted topping agent compounds and then added in the state of aqueous solution into the water system either continuously or intermittently. The topping agents are utilized in the usual manner for corrosion and scale preventing purposes. For instance, the phosphoric compounds or polyvalent metal salts may be added to a water system continuously or intermittently to maintain their necessary concentrations.

Generally, the phosphoric compounds should be present in the aqueous system in an amount of about 1—100 ppm (as $PO_4$) or the polyvalent metal salts should be present in an amount of about 1 to 50 ppm (as metal cation).

As is conventional in the art, the phosphoric compounds or polyvalent metal salts may be added, as pretreatment dosages, to the water system in an amount of about 20 to about 500 ppm, and thereafter a small quantity of chemicals may be added, as maintenance dosages.

The polymers may be used in combination with yet other topping agents including corrosion inhibitors for iron, steel, copper, copper alloys or other metals, conventional scale and contamination inhibitors, metal ion sequestering agents, and other conventional water treating agents. Other corrosion inhibitors comprise tungstate, nitrites, borates, silicates, oxycarboxylic acids, amino acids, catechols, aliphatic amino surface active agents, benzotriazole, and mercaptrobenzothiazole. Other scale and contamination inhibitors include lignin derivatives, tannic acids, starch, polyacylic soda, polyacrylic amide, etc. Metal ion sequestering agents include polyamines, such as ethylene diamine, diethylene triamine and the like and polyamino carboxylic acids, such as nitrilo triacetic acid, ethylene diamine tetraacetic acid, and diethylene triamine pentaacetic acid.

## EXAMPLES

The invention will now be futher described with reference to a number of specific examples which are to be regarded solely as illustrative, and not as restricting the scope of the invention.

### Example 1

Preparation of Acrylic Acid/Allyl Hydroxylpropyl Sulfonate Ether Copolymer

A suitable reaction flask was equipped with a mechanical agitator, a thermometer, a reflux condenser, a nitrogen inlet and two addition inlets for the initiator and monomer solutions. The flask was charged with 200 g of deionized water and 26 g of isopropanol. The resulting solution was then heated to reflux under a nitrogen blanket. 72 g of acrylic acid (1 mole) and 136 g of 1-propane sulfonic acid, 2-hydroxy-3-(2-propenyl oxy) mono sodium salt [AHPSE] (40%, 0.25 mole) were mixed in a separate flask so as to provide a mixed monomer solution. The mixed monomer solution was then transferred to an addition funnel. An initiator solution containing 27.3% of sodium persulfate in deionized water was prepared separately and sparged with nitrogen. The initiator solution (20 ml) was then added to the reaction flask along with the mixed monomer solution over a period of 2 hours. After this addition, the resulting mixture was heated for 2 more hours at 85°C and subsequently, 66.5 g of the isopropanol/water solution was stripped off. The reaction mixture was then cooled to less than 40°C and 60 g of 50% caustic solution was then added.

The structure of the resulting copolymer was verified by Carbon 13 NMR. The polymer solution, after being diluted to 25% solids with water, had a Brookfield viscosity of 14.5 mPas (14.5 cps) at 25°C. It was a stable solution with a slightly yellow color.

### Example 2

Utilizing both apparatus and procedure similar to that described in Example 1, 200 g of deionized water and 13 g of isopropanol were charged to a reaction flask. The solution was then heated to reflux temperature under a nitrogen blanket. 72 g of acrylic acid and 136 g of AHPSE (40%) were added to a separate flask so as to provide a mixed monomer solution. The mixed monomer solution wsa then added to the reaction flask along with an initiator solution comprising sodum persulfate over a 2 hour period. The reaction mixture was heated for 2 more hours and subsequently, 36.4 g of isopropanol/water solution was stripped off. The mixture was cooled to lower than 40°C and 60 g of 50% caustic solution was added.

The resulting polymer solution after being diluted to 25% with water, had a Brookfield viscosity of 19.8 mPas (19.8 cps) at 25°C.

### Example 3

Utilizing both apparatus and procedure similar to that described in Example 1, 15 g of isopropanol and 228 g of water were added to a reaction flask. 72 g of acrylic acid (1 mole) and 180 g of AHPSE (40% solution, 0.33 mole) were added to an addition funnel so as to provide a mixed monomer solution. The mixed monomer solution was then added to the reaction flask along with the sodium persulfate containing initiator solution over a 2 hour period, one hour after this addition a solution of t-butyl hydroperoxide (0.2 g in 10 ml of water) was added to the reaction mixture. The mixture was heated for 1 more hour and subsequently, 39.4 g of isopropanol/water solution was stripped off. The mixture was cooled to lower than 40°C and 60 g of 50% caustic was added.

The resulting copolymer solution, after being diluted to 25% solids, had a Brookfield viscosity of 15.9 mPas (15.9 cps) at 25°C.

Example 4

Utilizing the apparatus and procedure described in Example 1, 72 g of acrylic acid (1 mole) and 90.8 g of APHSE (40%, 0.167 mole) were used for copolymerization. The resulting polymer solution, after being diluted to 25%, had a Brookfield viscosity of 14.5 mPas (14.5 cps) at 25°C. The structure of the copolymer was varified by Carbon 13 NMR.

Example 5

Utilizing the apparatus and procedure as described in Example 1, 72 g of acrylic acid (1 mole) and 68.1 g of APHSE (40%, 0.125 mole) were used for copolymerization. The resulting polymer solution, after being diluted to 25% had a Brookfield viscosity of 15.1 mPas (15.1 cps) at 25°C.

Example 6

Apparatus, procedure and reagent charge similar to that described in Example 3 were used, except that this time, AHPSE (180 g, 40% solution) was initially charged into a reaction flask along with isopropanol and water. Acrylic acid (72 g) and sodium persulfate solution was then added to the reaction flask over a 2 hour period. The resulting copolymer solution, after isopropanol distillation, caustic addition and water dilution (to 25% solids) had a Brookfield viscosity of 22.5 mPas (22.5 cps) at 25°C.

Example 7

Apparatus, procedure and reagent charge similar to that described in Example 4 were used except that this time AHPSE (90.8 g, 40% solution) was charged initially into the reaction flask along with isopropanol and water. Acrylic acid (72 g) and sodium persulfate solution were then added to the reaction mixture over a 2 hour period. The resulting copolymer solution, after isopropanol distillation, caustic addition, and water dilution (to 25% solids) had a Brookfield viscosity of 15.4 mPas (15.4 cps) at 25°C.

Table I hereinbelow presents a summary of the physical properties of the copolymers produced in accordance with Examples 1 through 7.

Table 1

| Example Number | AA/AHPSE Molar Ratio | Viscosity (Brookfield 25% Soln. 25°C) m P a s | $\bar{M}n$ | pH |
|---|---|---|---|---|
| 1 | 4:1 | 14.5 | 2,550 | 5.9 |
| 2 | 4:1 | 19.8 | 3,600 | 5.5 |
| 3 | 3:1 | 15.9 | 2,900 | 5.7 |
| 4 | 6:1 | 14.5 | 2,080 | 6.1 |
| 5 | 8:1 | 15.1 | 2,260 | 6.7 |
| 6 | 3:1 | 22.5 | 3,760 | 6.1 |
| 7 | 6:1 | 15.4 | 2,217 | 6.2 |

AA = acrylic acid

AHPSE = ally hydroxypropyl sulphate ether; IUPAC 1-propane sulfonic acid, 2-hydroxy-3-(2-propenyl oxy)-mono sodium salt.

Deposit Control Activity

One method of evaluating deposit control activity material consists of measuring its ability to prevent bulk phase precipitation of a salt at conditions for which the salt would normally precipitate. It is additionally important to recognize that the material being evaluated is tested at "substoichiometric" concentrations. That is, typical molar ratios of precipitating cation to the material being evaluated are on the order of 20:1 and much greater. Consequently, stoichiometric sequestration is not the route through which bulk phase precipitation is prevented. This well known phenomenon is also called "threshold" treatment and is widely practiced in water treatment technology for the prevention of scale (salt) deposits from forming on various surfaces. In the results that follow calcium phosphate and calcium phosphonate salts have been selected as precipitants. Inhibition of calcium phosphate is important in those treatment

approaches wherein orthophosphates are used in the system to promote formation of the passivated gamma iron oxide film along the treated metal surfaces. Presently, in highly alkaline systems, phosphonic acid derivatives are commonly used to inhibit calcium carbonate formation. In these systems the precipitation of calcium phosphonate has proven to be a problem. The polymers of the present invention has been evaluated for their ability to prevent precipitation (i.e., inhibit crystallization) of these salts. The results are expressed as "percent inhibition", positive values indicate that the stated percentage of precipitate was prevented from being formed. Except as where noted to the contrary, the following conditions, solutions, and testing procedure were utilized to perform the inhibition tests, the results of which are reported herein in Tables II to IVa.

CALCIUM PHOSPHATE INHIBITION PROCEDURE

*Conditions*
T = 70°C
pH = 8.5
17 hour equilibration
$Ca^{+2}$ = 250 ppm as $CaCO_3$
$PO_4^{-3}$ = 6 ppm

*Solutions*
36.76 $CaCl_2 \cdot 2H_2O$/liter $DIH_2O$
0.4482 g $Na_2HPO_4$/liter $DIH_2O$

*Procedure*
1) To about 1800 ml $DIH_2$ in a 2 litre volumetic flask, add 20 ml of $CaCl_2 \cdot 2H_2O$ solution followed by 2 drops of conc. HCl.
2) Add 40 ml of $Na_2HPO_4$ solution.
3) Bring volume to 2 litres with DI water.
4) Place 100 ml aliquots of solution in 114 $cm^3$ (4 oz) glass bottles.
5) Add treatment.
6) Adjust pH as desired.
7) Place in 70°C water bath and equilibrate for 17 hours.
8) Remove samples and filter while hot through 0.2 micron filters.
9) Cool to room temperature and take Absorbance measurements using Leitz photometer (640 nm).
   Preparation for Leitz
   a. 5 mls filtrate
   b. 10 mls Molybdate Reagent
   c. 1 dipper Stannous Reagent
   d. Swirl 1 minute, pour into Leitz cuvette; wait 1 minute before reading.
10. Using current calibration curve (Absorbance vs ppm $PO_4^{-3}$) find ppm $PO_4^{-3}$ of each sample.

Calculation:

$$\% \text{ Inhibition} = \frac{\text{ppm } PO_4^3 \text{ (treated)} - \text{ppm } PO_4^3 \text{ (control)} \times 100}{\text{ppm } PO_4^3 \text{ (stock)} - \text{ppm } PO_4^3 \text{ (control)}}$$

CALCIUM PHOSPHONATE PRECIPITATION INHIBITION PROCEDURE

*Conditions:* Static Beaker Study; 750 ppm $Ca^{+2}$ as $CaCO_3$; pH = 8.7; T = 70°C (158°F); 18 hour equilibration Time; 10 ppm 1-hydroxyethylidene 1,1-disphosphonic acid (HEDP).

*Experimental*
Prepare following solutions:
Stock Sol'n = 2.206 g $CaCl_2 \cdot 2H_2O$ + 0.033 g HEDP/2 liters.
Treatment — 1,000 ppm active solutions.

*Procedure*
1) To clean 114 $cm^3$ (4 oz) bottle add 100 ml of stock solution.
2) Add treatment with stirring.
3) Adjust pH to 8.7 with a dilute NaOH sol'n.
4) Place samples in water bath at T = 70°C (158°F), for 18 hours, after which time filter aliquot through 0.2 micron filter paper.
5) Analyze filtrate for organic phosphate (TP = total phosphate).

*Calculation of % Inhibition*

$$\% \text{ Inh.} = \frac{\text{ppm TP in Treated Sample} - \text{ppm TP in Untreated Control}}{\text{ppm TP Initial} - \text{ppm TP in Untreated Control}}$$

Table II - $Ca_3(PO_4)_2$ Precipitation Inhibition

| Treatment | % Inhibition<br>Treatment Concentrations (ppm active)<br>5 | 10 | 15 |
|---|---|---|---|
| Acrylic acid/2-hydroxy propylacrylate copolymer Mn ≃ 2,000; AA/HPA Molar ratio 3:1 | 59.3 | 88.9 | 90.7 |
| Sulfonated styrene/ maleic anhydride copolymer MW ≃ 1,500 SS/MA molar ratio 3:1 | 50.0 | 81.5 | 90.7 |
| Example 1 Copolymer | 42.6 | 90.7 | 94.4 |
| Example 2 Copolymer | 48.1 | 90.7 | 100.0 |
| Example 3 Copolymer | 53.7 | 92.6 | 100.0 |
| Acrylic acid/2-hydroxy propylacrylate copolymer Mn ≃ 2,000, AA/HPA molar ratio 3:1 | 31.7 | 87.3 | 87.3 |
| Example 4 Copolymer | 22.2 | 84.1 | 93.7 |
| Example 5 Copolymer | 12.7 | 84.1 | 90.5 |

Table III - Calcium Phosphonate Inhibition

| Treatment | % Inhibition Treatment Concentration (ppm active) 5 | 10 | 15 | 20 |
|---|---|---|---|---|
| Sulfonated styrene/ maleic anhydride copolymer MW ≈ 1,500 SS/MA molar ratio 3:1 | 2.9 | 4.4 | 26.5 | 72.1 |
| Example 1 Copolymer | 0.0 | 0.0 | 17.6 | 76.5 |
| Example 2 Copolymer | 0.0 | 0.0 | 33.8 | 69.1 |
| Example 3 Copolymer | 0.0 | 2.9 | 51.5 | 82.4 |
| Sulfonated styrene/ maleic anhydride copolymer MW ≈ 1,500 SS/MA molar ratio 3:1 | 4.2 | 5.6 | 25.4 | 69.0 |
| Example 4 Copolymer | 0.0 | 0.0 | 0.0 | 2.8 |
| Example 5 Copolymer | 0.0 | 0.0 | 0.0 | 0.0 |

Table IV - $Ca_3(PO_4)_2$ Precipitation Inhibition

| Treatment | % Inhibition Treatment Concentration (ppm active) 10 ppm |
|---|---|
| Acrylic acid/2-hydroxy propylacrylate Mn ≈ 2,000; AA/HPA molar ratio 3:1 | 70.4 |
| Example 1 Copolymer | 90.7 |
| Example 2 Copolymer | 94.4 |
| Example 3 Copolymer | 94.4 |

Table IVa - $Ca_3(PO_4)_2$ Precipitation Inhibition

| Treatment | Treatment Level (ppm) | % Inhibition |
|---|---|---|
| Example 1 Copolymer | 2.5 | 25.9 |
| Example 1 Copolymer | 5.0 | 46.3 |
| | 10.0 | 90.7 |
| | 20.0 | 100.0 |
| Example 2 Copolymer | 2.5 | 18.5 |
| | 5.0 | 44.4 |
| | 10.0 | 94.4 |
| | 20.0 | 100.0 |
| Example 3 Copolymer | 2.5 | 38.9 |
| | 5.0 | 42.6 |
| | 10.0 | 94.4 |
| | 20.0 | 100.0 |
| Acrylic acid/ | 2.5 | 31.5 |
| 2-hydroxypropyl | 5.0 | 44.4 |
| acrylate copolymer | 10.0 | 70.4 |
| Mn $\approx$ 2,000; AA:HPA | 20.0 | 98.1 |
| molar ratio = 3:1 | | |

Ferric Oxide Dispersion

In order to demonstrate the effectiveness of the polymers of the invention in dispersing suspended particulate matter, the following procedure, using $Fe_2O_3$ as suspended solids, was undertaken. Results appear in Table V. In the results, it is noted that increasing Δ%T values indicate better treatment as more particles remain suspended in the aqueous medium.

$Fe_2O_3$ DISPERSION PROCEDURE

*Conditions:*
T = 25°C
pH = 7.5
200 ppm $Ca^{+2}$ as $CaCO_3$

*Solutions:*
0.1% solution $Fe_2O_3$ in D.I. $H_2O$
3.68 g $CaCl_2 \cdot 2H_2O$/100 ml DI $H_2O$

*Procedure*

(1) Prepare a suspension of 0.1% $Fe_2O_3$ in DI $H_2O$.
(2) Adjust hardness to 200 ppm $Ca^{+2}$ as $CaCO_3$ using $CaCl_2 \cdot 2H_2O$ solution — 8 ml/1000 ml of $Fe_2O_3$ solution.
(3) Using overhead mixer, mix suspension ½ hour at 1000 rpms.
(4) Remove solution to magnetic stirrer and adjust to pH 7.5 (about 20 minutes to stabilize pH).
(5) Return solution to overhead mixer.
(6) Take 90 ml aliquots of suspension and place 114 cm³ (4 oz) glass bottle.
(7) Add treatment and DI water to bring total volume to 100 ml.

(8) Cap bottle, invert several times and place on reciprocating shaker at a moderate speed of about 40 spm for ½ hour.
(9) Place on vibration-proof surface and allow to stand 18 hours.
(10) Without disturbing settled phase, pipet the top 40 mls off the sample. Place in a cell and read %T (at 415 nm). (%T means percentage transmission or transmittance).

Calculation:

$$\Delta\%T = \%T\ (\text{control}) - \%T\ (\text{treated})$$

Table V

| Treatment | Treatment Level (ppm) | Δ%T |
|---|---|---|
| Example 1 Copolymer | 2.5 | 7.5 |
| | 5.0 | 20.7 |
| | 10.0 | 21.2 |
| | 20.0 | 20.7 |
| Example 2 Copolymer | 2.5 | 12.0 |
| | 5.0 | 10.0 |
| | 10.0 | 10.2 |
| | 20.0 | 10.7 |
| Example 3 Copolymer | 2.5 | 15.1 |
| | 5.0 | 23.1 |
| | 10.0 | 25.9 |
| | 20.0 | 25.4 |
| Acrylic acid/2-hydroxy | 2.5 | 9.3 |
| propyl acrylate Mn ≃ 2,000 | 5.0 | 15.4 |
| molar ratio AA:HPA | 10.0 | 15.1 |
| = 3:1 | 20.0 | 16.4 |
| | 30.0 | 16.9 |

Recircular Studies

In order to approximate those conditions experienced in cooling tower, tests were conducted under recirculatory conditions with heat transfer provided.

These conditions closely simulate the environment in a field cooling system. In this test system treated water is circulated by a centrifugal pump through a corrosion coupon by-pass into which corrosion coupons are inserted, and past a mild steel (AISI—1010) heat exchanger tube contained in a plexiglass block. The inside of the exchanger tube is filled with silicone oil and heated with an electric heater. The temperature of the silicone oil can be regulated. The water velocity past the corrosion coupons and heat exchanger tube can be controlled anywhere from 0 to 137.2 cm/sec (0 to 4.5 ft/sec).

The pH and temperature of the bulk water are automatically controlled. The treated water is prepared by chemical addition to deionized water. Provisions for continuous make-up and blowdown are made by pumping fresh treated water from supply tanks to the sump, with overflow from the sump serving as blowdown.

Corrosion rates are determined by exposing precleaned and weighed metal specimens for a specified period of time, after which they are removed, cleaned and reweighed. Corrosion rates are calculated by dividing the total coupon weight loss by the number of days exposure.

The conditions used were: Heat flux 25240 W/m$^2$ (8000 BTU/ft$^2$/hr); Water Velocity = 91 cm/sec (3 ft/sec); water temperature = 49°C (120°F); Retention Time = 1.3 days; Mild Steel Heat Transfer Surface.

Water Chemistry: 600 ppm Ca $CaCO_3$; 300 ppm $Mg^{+2}$ as $CaCO_3$; 83 ppm $NaHCO_3$; pH = 7.3 ± 0.2.

Treatment: 12.5 ppm active polymer; 3.0 ppm tolyltriazole; 10.5 ppm tetrapotassium pyrophosphate; 15.2 ppm monosodium phosphate; HEDP 4.0 ppm.

The following results were obtained:

Table VI

| Treatment | Mild Steel Corrosion* | Pretreated Mild Steel Corrosion | Admiralty Corrosion | Remarks |
|---|---|---|---|---|
| Example 1 Copolymer | 0.030 mm/y (1.2 mpy) | $2.54 \times 10^{-3}$ mm/y (0.1 mpy) | $2.54 \times 10^{-3}$ mm/y (0.1 mpy) | No significant corrosion or deposition on steel surfaces. |
| Example 2 Copolymer | 0.0x30 mm/y (1.2 mpy) | $2.29 \times 10^{-3}$ mm/y (0.9 mpy) | $1.27 \times 10^{-3}$ mm/y (0.5 mpy) | No significant corrosion or deposition on mild steel surfaces |
| Example 5 Copolymer | 0.028 mm/y (1.1 mpy) | $2.03 \times 10^{-3}$ mm/y (0.8 mpy) | $1.27 \times 10^{-3}$ mm/y (0.5 mpy) | Heat transfer surfaces covered with uniform white deposit. |

* mpy = mils per year, mm/y = millimetres per year

### Example 8

Copolymer of Methacrylic Acid and AHPSE

Utilizing both apparatus and procedure similar to that described in Example 1, 228 g of water and 180 g of AHPSE (40% solution, 0.33 mole) were added to a reaction flask, 86 g of methacrylic acid (1 mole) and sodium persulfate solution were then separately added to the reaction mixture over a 2 hour period at 85°C. The resulting polymer solution was further neutralized with 70 g of caustic (50%) and diluted to a 25% solids solution. The final solution had a Brookfield viscosity of 28.2 mPas (28.2 cps) at 25°C. The molecular weight Mn of the copolymer was 3,400.

### Example 9

Preparation of Acrylic Acid/Methacrylic Acid/AHPSE Terpolymer

A suitable reaction flask was equipped with a mechanical agitator, a thermometer, a reflux condenser, a nitrogen inlet and 2 addition inlets for the initiator and monomer solutions, respectively. The flask was charged with 220 g of deionized water, 43 g of isopropanol and 109 g of 1-propane sulfonic acid, 2-hydroxy-3-(2-propenyloxy) mono sodium salt [AHPSE] (40%, 0.2 mole). The solution was then heated to 85°C under a nitrogen blanket. 72 g of acrylic acid (1 mole) and a separate methacrylic acid (0.2 mole) were mixed in a separate flask so as to provide a mixed monomer solution. The mixed monomer solution was transferred to an additional funnel. An initiator solution containing 31% of sodium persulfate in deionized water was prepared separately and sparged with nitrogen. The initiator solution (17 ml) was then added to the reaction flask along with the mixed monomer solution over a period of 2 hours. After the addition, the mixture was heated for 2 more hours at 85°C and subsequently, 129 g of isopropanol/water solution were stripped off. The reaction mixture was then cooled to less than 40°C and 60 g of 50% caustic solution were then added.

The structure of the resulting terpolymer was verified by Carbon 13 NMR. The polymer solution, after being diluted to 25% solids with water, had a Brookfield viscosity of 14.8 mPas (14.8 cps) at 25°C. It was a stable solution with a slightly yellow color.

### Example 10

Acrylic Acid/Methacrylic Acid/AHPSE Terpolymer

Utilizing both apparatus and procedure similar to that described in Example 9, 28 g of deionized water and 15 g of isopropanol were charged to a reaction flask. The solution was then heated to reflux

temperature under a nitrogen blanket. 36 g of acrylic acid (0.5 mole), 43 g of methacrylic acid (0.5 mole) and 180 g of AHPSE (40%, 0.33 mole) were added to a separate flask so as to provide a mixed monomer solution. The mixed monomer solution was then added to the reaction flask along with an initiator solution comprising sodium persulfate over a 2 hour period. The reaction mixture was heated for 2 more hours and subsequently, 39 g of isopropanol/water solution were stripped off. The mixture was cooled to lower than 40°C and 60 g of 50% caustic solution were added.

The resulting terpolymer solution, after being diluted to 25% with water, had a Brookfield viscosity of 18.9 mPas (18.9 cps) at 25°C.

Example 11

Acrylic Acid/Methacrylic Acid/AHPSE Terpolymer

Utilizing both apparatus and procedure similar to that described in Example 9, 15 g of isopropanol, 228 g of water and 180 g of AHPSE (40% solution, 0.33 mole) were added to a reaction flask. The mixture was heated to 85°C under nitrogen. 36 g of acrylic acid (0.5 mole) and 43 g of methacrylic acid were added to an additional funnel so as to provide a mixed solution. The mixed monomer solution was then added to the reaction flask along with a sodium persulfate solution over a 2 hour period.

One hour after the addition, a solution of t-butyl hydroperoxide (0.2 g in 5 ml of water) was added to the reaction mixture. The mixture was heated for 1 more hour and subsequently an isopropanol/water solution was stripped off. The mixture was cooled to lower than 40°C and 65 g of 50% caustic were added.

The resulting terpolymer solution after being diluted to 25% solids had a Brookfield viscosity of 24.7 mPas (24.7 cps) at 25°C.

Example 12

Acrylic Acid/Methacrylic Acid/AHPSE Terpolymer

Apparatus, procedure and reagent charge similar to that described in Example 11 were used, except no isopropanol was used. The resulting terpolymer solution after being diluted to 25% had a Brookfield viscosity of 30.7 mPas (30.7 cps) at 25°C.

Example 13

Preparation of Acrylic Acid/Acrylamide/AHPSE Terpolymer

Utilizing both apparatus and procedure similar to that described in Example 9, 220 g of deionized water, 43 g of isopropanol and 90.8 g of AHPSE (40%, 0.17 mole) were charged to a reaction flask. The solution was then heated to 85°C under a nitrogen blanket. 36 g of acrylic acid (0.5 mole) and 72.1 g of acrylamide solution (90%, 0.5 mole) were added to a separate flask so as to provide a mixed monomer solution. The mixed monomer solution was then added to the reaction flask along with a solution persulfate containing solution over a 2 hour period. One hour after the addition, a solution of t-butyl hydroperoxide (0.2 g of 5 ml of water) was added to the reaction mixture. The mixture was heated for 1 more hour and subsequently, 136 g of isopropanol/water solution were stripped off. The mixture was cooled to lower than 40°C and caustic solution was added to adjust the solution to pH 6.

The structure of the terpolymer was verified by Carbon 13 NMR, no residual monomer was detected. The polymer solution had a Brookfield viscosity of 13.2 mPas (13.2 cps) at 25% solids at 25°C.

Example 14

Preparation of Acrylic Acid/Hydroxypropyl Acrylate and AHPSE Terpolymer

Utilizing both apparatus and procedure similar to that described in Example 13, 72.1 g of acrylic acid (1 mole), 18.6 g of 2-hydroxypropyl acrylate (0.14 mole) and 77.9 g of AHPSE (40%, 0.14 mole) were used for polymerization. The resulting polymer solution after being diluted to 25%, had a Brookfield viscosity of 14.5 mPas (14.5 cps) at 25°C.

Tables VII—IX herein below present a summary of the physical properties of the terpolymers produced in accordance with Examples 9 through 14.

Table VII

Terpolymers of Acrylic Acid, Methacrylic Acid with AHPSE

| Example No. | AA/MAA/AHPSE Mole Ratio | Viscosity (25% m P a s 25°C) | $\bar{M}n$ Number Average | pH |
|---|---|---|---|---|
| 9 | 5:1:1 | 14.8 | 2,500 | 6.0 |
| 10 | 1.5:1.5:1 | 18.9 | 2,660 | 6.4 |
| 11 | 1.5:1.5:1 | 24.7 | 3,700 | 6.0 |
| 12 | 1.5:1.5:1 | 30.7 | 4,360 | 6.5 |

Table VIII

Terpolymers of Acrylic Acid, Acrylamide with AHPSE

| Example No. | AA/MAA/AHPSE Mole Ratio | Viscosity (25% m P a s 25°C) | Mn Number Average | pH |
|---|---|---|---|---|
| 13 | 3:3:1 | 13.2 | 3,100 | 6.0 |

Table IX

Terpolymers of Acrylic Acid, Hydroxypropyl Acrylate with AHPSE

| Example No. | AA/HPA/AHPSE Mole Ratio | Viscosity (25% m P a s 25°C) | Mn Number Average | pH |
|---|---|---|---|---|
| 14 | 7:1:1 | 14.7 | 2,165 | 6.0 |

AHPSE = ally hydroxpropyl sulfonate ether; IUPAC 1-propane sulfonic acid, 2-hydroxy-3-(2-propenyloxy)-mono sodium salt.

Certain of the terpolymers of examples 9—14 were subjected to calcium phosphate deposit control tests, the procedure for which is detailed hereinabove. Results are reported in Table X.

Table X

CALCIUM PHOSPHATE INHIBITION

Conditions: 250 Ca as $CaCO_3$ pH = 7.5
6 ppm $PO_4$ Equilibration Time = 18 hours
Temp. = 70°C

| Terpolymer | ppm Treatment | % Inhibition |
|---|---|---|
| Example 13 | 2.5 | 24.6 |
| | 5.0 | 76.8 |
| | 10.0 | 100.0 |
| | 20.0 | 97.1 |
| Example 14 | 2.5 | 30.4 |
| | 5.0 | 63.8 |
| | 10.0 | 88.4 |
| | 20.0 | 97.1 |
| Example 9 | 2.5 | 30.4 |
| | 5.0 | 50.7 |
| | 10.0 | 91.3 |
| | 20.0 | 98.6 |
| AA/HPA | 5.0 | 36.2 |
| | 10.0 | 66.7 |
| | 20.0 | 94.2 |

AA/HPA = Acrylic Acid/Hydroxypropyl Acrylate Copolymer
MW 2,000, mole ratio AA:HPA = 3:1

In order to ascertain the efficacy of the terpolymers of the present invention in dispersing "particulate matter" in an aqueous medium, the tests were undertaken using montmorillonite clay as suspended solids material. The procedure utilized was similar to that reported hereinabove for the ferric oxide dispersion tests with the obvious exception that montmorillonite clay was substituted for ferric oxide as the suspended particulate matter. Results of this test appear in Table XI.

Table XI

MONTMORILLONITE DISPERSION

| | | | |
|---|---|---|---|
| Conditions: | 1000 ppm Montmorillonite | Temp: | 47°C |
| | 200 ppm $Ca^{+2}$ | pH: | 7.0 |
| | Equilibration Time = 18 hours | $NaHCO_3$ | 86 ppm |

| Sample No. | ppm Active | % Inhibition |
|---|---|---|
| Example 14 | 2.5 | 17.7 |
| | 5 | 23.5 |
| | 10 | 36.7 |
| Example 9 | 2.5 | 12.0 |
| | 5 | 21.4 |
| | 10 | 36.4 |
| PAA | 2.5 | 3.7 |
| | 5 | 25.0 |
| | 10 | 37.2 |

PAA = Polyacrylic Acid, MW = 5,000

Spinner tests were performed to evaluate the use of acrylic acid and AHPSE containing polymers as a corrosion inhibitor of soft water. The tests were each conducted with two non-pretreated low carbon steel coupons which were immersed and rotated in aerated synthetic cooling water for a 3 or 4 day period. The water was adjusted to the desired pH and readjusted after one day if necessary; no further adjustments were made. Water temperature was 49°C (120°F), and rotational speed was maintained to give a water velocity of 39.6 cm/sec (1.3 feet per second) past the coupons. Cooling water was manufactured to give the conditions indicated in Table XII.

Corrosion rates were determined by weight loss measurement. Prior to immersion, coupons were scrubbed with a mixture of trisodium phosphate-pumice, rinsed with water, rinsed with isopropanol and then air dried. Weight measurement to the nearest milligram was made. At the end of one day, a weight coupon was removed and cleaned. Cleaning consisted of immersion into a 50% solution of HCl for about 20 seconds, rinsing with tap water, scrubbing with a mixture of trisodium phosphate — pumice until clean and then rinsing with tap water and isopropanol. When dry, a second weight measurement to the nearest milligram was made. At the termination of the tests, the remaining coupon was removed, cleaned and weighed.

Corrosion rates were calculated by differential weight loss according to the equation:

$$\text{Corrosion Rate} = \frac{\text{Nth Day Weight Loss} - \text{1st Day Weight Loss}}{N-1}$$

As shown in Table XVI, these polymers all gave substantial corrosion protection when used in combination with molybdate ($MoO_4^=$).

Table XII

"Spinner" Corrosion Inhibition Test

Water Chemistry: 40 ppm $Ca^{++}$ (as $CaCO_3$), 20 ppm $Mg^{++}$ (as $CaCO_3$)
15 ppm "M" (as $CaCO_3$), pH = 7.5

| Polymer Treatment | Mole Ratio | Mol. Wt. $\bar{M}N$ | Polymer Dosage ppm | Molybdate ppm | Corr. Rate LCS * | |
|---|---|---|---|---|---|---|
| | | | | | mm/y | mpy |
| -- | -- | -- | -- | -- | 2.24 | 88 |
| -- | -- | -- | -- | 20 | 1.96 | 77 |
| AA/AHPSE | 3:1 | 3,760 | 10 | -- | 2.21 | 87 |
| AA/AHPSE | 3:1 | 3,760 | 10 | 20 | 0.29 | 11.3 |
| AA/AHPSE | 6:1 | 2,080 | 10 | -- | 3.18 | 125 |
| AA/AHPSE | 6:1 | 2,080 | 10 | 20 | 0.23 | 9.1 |
| MAA/AHPSE | 3.1 | 3,400 | 10 | -- | 2.26 | 89 |
| MAA/AHPSE | 3.1 | 3,400 | 10 | 20 | 0.21 | 8.1 |
| AA/MAA/AHPSE | 1.5:1.5:1 | 3,700 | 10 | -- | 2.87 | 113 |
| AA/MAA/AHPSE | 1.5:1.5:1 | 3,700 | 10 | 20 | 0.23 | 9.2 |

AA = acrylic acid
MAA = methacrylic acid
AHPSE = ally hydroxypropyl sulfonate ether, IUPAC 1-propane sulfonic acid, 2-hydroxy-3-(2-propenyl oxy)-mono sodium salt
* mpy = mils per year, mm/y = millimetres per year

The examples demonstrate that the copolymers and terpolymers of the present invention are effective in inhibiting the formation of calcium phosphate and calcium phosphate.

As the polymers are effective in inhibiting calcium phosphate formation, they would also be effective in gas scrubbing systems where scrubbing mediums such as sewage treatment effluents contain high phosphate levels. Such systems would have the prerequisite for the formation and deposition of calcium phosphate which is to be avoided. Additional areas of application such as the phosphate production and processing field, fertilizer field, automotive metallic part pretreatment field, etc. will be apparent to those skilled in the art.

Further, the copolymers are effective in dispersing iron oxide (Table V) which is sometimes encountered as a troublesome fouling species. Additionally, the terpolymers are effective in dispersing montmorillonite clay (Table XII) another commonly encountered fouling species.

In another aspect of the present invention, the water soluble copolymers and terpolymers herein specified, when used conjointly with orthophosphate, passivate metal surfaces in contact with the water system. Under this treatment approach, corrosion is inhibited without production of substantial attendant scale deposition along the treated metal surface (as would be expected in barrier film approaches).

In order to passivate the metal surfaces, the aqueous system should first be adjusted to a pH of 5.5 or above, and secondly measured to assure a calcium ion content (or other appropriate ion such as zinc, nickel, chromium and mixtures thereof). The water soluble copolymers or terpolymers should then be conjointly used with a water soluble orthophosphate compound. Exemplary orthophosphate compounds include: phosphoric acid, the sodium orthophosphate, the potassium orthophosphate, the lithium orthophosphates and ammonium orthophosphates. The following specific compounds are exemplary:

| | |
|---|---|
| $H_3PO_4$ | phosphoric acid |
| $LiH_2PO_4$ | lithium di acid phosphate |
| $Na_3PO_4$ | trisodium orthophosphate |
| $Na_2HPO_4$ | disodium orthophosphate |
| $NaH_2PO_4$ | monosodium orthophosphate |
| $NaH_3(PO_4)_2$ | hemisodium orthophosphate |
| $K_3PO_4$ | tripotassium orthophosphate |
| $K_2HPO_4$ | dipotassium orthophosphate |
| $KH_2PO_4$ | monopotassium orthophosphate |
| $(NH_4)_3PO_4$ | triammonium orthophosphate |
| $(NH_4)_2HPO_4$ | diammonium orthophosphate |
| $(NH_4)H_2PO_4$ | monoammonium orthophosphate |

In addition to the inorganic orthophosphates set forth above may be mentioned the organic orthophosphates which are set forth in U.S. Pat. No. 3,510,436. The specific compounds are those which possess the basic formula.

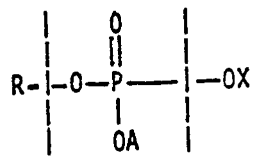

where R is an organic radical as described in the patent, X is A or R, and A is H, Na, Li, K or $NH_4$. Compounds of the above nature are an excellent source of orthophosphate.

In accordance with the passivation aspect of the invention, it is essential to use the polymers with an appropriate orthophosphate source. For enhanced protection, the polymer and orthophosphate may be combined with an organo-phosphonate, such as hydroxyethylidene diphosphonic acid and/or a polyphosphate.

Accordingly, the invention contemplates the use of a composition containing the copolymers and terpolymers and the orthophosphate and optionally but preferably the phosphonate, the polyphosphate and copper corrosion inhibitors. A typical composition contains on a weight ratio basis of polymer to orthophosphate expressed as $PO_4^{-3}$ of about 1:8 to about 4:1 and preferably about 1:6 to 2:1. when a polyphosphate is included, the weight ratio of orthophosphate to polyphosphate on a $PO_4^{-3}$ to $PO_4^{-3}$ basis is 15:1 to 1:3, and preferably 2.5:1 to 1:1. Similarly, if the organo-phosphate is included, the ratio of the orthophosphate to the phosphonate expressed as $PO_4^{-3}$ to $PO_4^{-3}$ is 1:2 to 13:1, and preferably 2:1 to 8:1. Any copper corrosion inhibitor may be included in the composition (0.01 to 5% by weight) in an amount which will be effective for controlling the copper corrosion in a given system: 0.05 to 10 parts per million and preferably 0.5 to 5 parts per million.

In treating the aqueous systems the following dosages are desirable, with the dosages, of course, being based upon the severity of the corrosion problem foreseen or experienced:

orthophosphate (expressed as $PO_4^{-3}$ ): 2 to 50 parts per million parts of water (ppm) and preferably 6 to 30 ppm;

polymer; 0.3 to 120 ppm and preferbly 3 to 25 pm of water;

polyphosphate (expressed as $PO_4^{-3}$): 0.1 to 30, and preferably 3 to 10, parts per million parts of water;

phosphonate (expressed as $PO_4^{-3}$): 0.04 to 20, and preferably 1 to 6, parts per million parts of water.

The preferred rate of application of this treatment to cooling water systems and the ratios of various components depends on the calcium concentration of the cooling water. The treatment is preferably applied in waters having between 15 ppm and 1,000 ppm calcium. Within this range the weight ratio of calcium to orthophosphate is varied from 1:1 to 83.3:1, the weight ratio of the copolymers or terpolymers to orthophosphate is varied from 1:3 to 1.5:1.

As earlier disclosed, the orthophosphate is generally obtained by direct addition. However, it is understood that the orthophosphate can also arise due to reversion of either inorganic polyphosphates or the organo-phosphonates, or any other appropriate source or precursor thereof.

The above dosages represent the most desirable ranges since most systems will be treatable therewith. Higher dosages are permissible when the situation demands, but of course are most costly. The effectiveness of the inventive treatments is dependent upon the aqueous medium having a pH of 5.5 and above, and preferably 6.5 to 9.5, and containing calcium ion concentrations of, preferably about 15 parts per million parts of water. Below this range, it may be necessary for overall effectiveness to add metallic ions such a zinc, nickel, chromium, etc., as described in column 3, lines 4 to 24 of U.S. Pat. No. 3,837,803.

## Claims

1. A method of controlling the deposition of calcium phosphate or phosphonate on the structural parts of a system exposed to an aqueous medium, which comprises adding to the aqueous medium an effective amount for the purpose of a water soluble polymer comprising repeat unit moieties (a) and (b), wherein the repeat unit (a) comprises

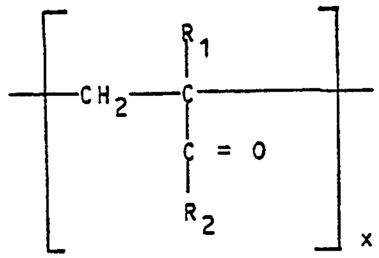

and wherein the repeat unit (b) comprises the structure

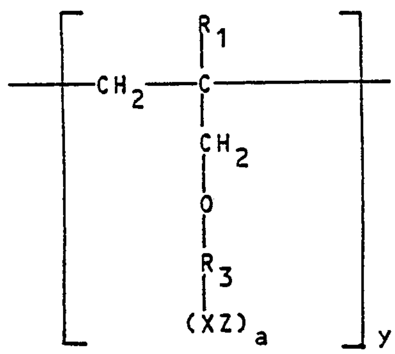

wherein x and y are integers, $R_1$ is H or lower alkyl ($C_1$—$C_3$), $R_2$ is OH, OM or $NH_2$, M is a water soluble cation, $R_3$ is a hydroxy substituted alkyl or alkylene radical having from 1 to 6 carbon atoms or a non-substituted alkyl or alkylene radical having from 1 to 6 carbon atoms, X is an anionic radical, Z is H or hydrogens or a water soluble cation or cations which together counterbalance the valence of X, and a is 0 or 1.

2. A method according to claim 1 for controlling the deposition of calcium phosphate on the structural parts of a system exposed to an aqueous medium containing calcium cations and phosphate anions under deposit forming conditions.

3. A method according to claim 1 for controlling the deposition of calcium phosphonate on the structural parts of a system exposed to an aqueous medium prone to such deposition.

4. A method according to any of claims 1 to 3, wherein the water soluble polymer comprises a third repeat unit moiety (c), the repeat unit (c) comprising a monomeric repeat unit selected from acrylic acid, alkyl acrylate, hydroxylated lower alkyl ($C_1$—$C_6$) acrylate, methacrylic acid, and acrylamide and water soluble salt forms thereof, with the proviso that repeat unit (a) and repeat unit (c) are different.

5. A method according to any of claims 1 to 4, wherein $R_1$ is hydrogen, $R_2$ is OH or OM, $R_3$ is 2-hydroxypropylidene, X is $SO_3$ and Z is a member or members selected from H, Na, $NH_4^+$, Ca and K and wherein a is one.

6. A method according to any of claims 1 to 5, wherein the molar ratio x:y is from 30:1 to 1:20.

7. A method according to claim 6, wherein the number of average molecular weight of the water soluble polymer is from 1,000 to 1,000,000, the molar ratio x:y is from 10:1 to 1:5 and the system is a cooling water system.

8. A method according to any of claims 1 to 7, wherein there is also added to the aqueous medium from 1 to 500 ppm of a topping agent selected from inorganic phosphoric acids, phosphonic acids organic phosphoric acid esters, salts of said acids and esters, and polyvalent metal salts.

9. A method as claimed in claim 8, wherein the topping agent is 2-phosphonobutane 1,2,4-tricarboxylic acid.

10. A method as claimed in claim 8, wherein the topping agent is a molybdate containing compound.

11. A method of inhibiting the corrosion of ferrous metal parts in contact with an aqueous solution with little or no attendant deposition of scale on the ferrous parts, which corrosion inhibition is obtained by providing for the formation of a protective passive oxide film on the metal surface in contact with the aqueous medium, which method comprises adding to the aqueous medium (A) a water soluble polymer comprising repeat unit moieties (a) and (b) wherein the repeat unit (a) comprises the structure.

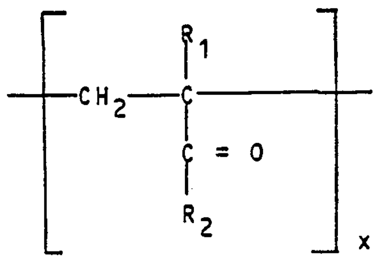

and wherein the repeat unit (b) comprises the structure

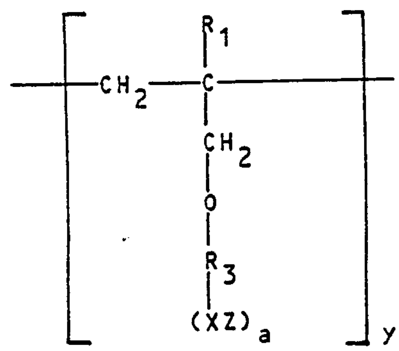

wherein x and y are integers, $R_1$ is H or lower alkyl ($C_1$—$C_3$), $R_2$ is OH, OM or $NH_2$, M is a water soluble cation, $R_3$ is a hydroxy substituted alkyl or alkylene radical having from 1 to 6 carbon atoms or a non-substituted alkyl or alkylene radical having from 1 to 6 carbon atoms, X is an anionic radical, Z is H or hydrogens or a water soluble cation or cations which together counterbalance the valence of X, and a is 0 or 1, and (B) a water soluble orthophosphate compound, the polymer and the orthophosphate compound, being sufficient to provide a substantially scale-free protective passive oxide film on the metallic surface.

12. A method according to claim 11, wherein the water soluble polymer comprises a third repeat unit moiety (c), the repeat unit (c) comprising a monomeric repeat unit selected from acrylic acid, alkyl acrylate, hydroxylated lower alkyl ($C_1$—$C_6$) acrylate, methacrylic acid and acrylamide and water soluble salt forms thereof, with the proviso that repeat unit (a) and repeat unit (c) are different.

13. A method according to claim 11 or 12, wherein $R_1$ is hydrogen, $R_2$ is OH or OM, $R_3$ is 2-hydroxypropylidene, X is $SO_3$ and Z is a member or members selected from H, Na, $NH_4$, Ca and K and wherein a is one.

14. A method according to any of claims 11 to 13, wherein the molar ratio x:y is from 30:1 to 1:20.

15. A method according to claim 14, wherein the number average molecular weight of said water soluble polymer is from 1,000 to 1,000,000 the molar ratio x:y is from 10:1 to 1:5 and the aqueous medium comprises a cooling water system.

16. A method according to any of claims 11 to 15, wherein there is also added to the aqueous medium from 1 to 500 ppm of a topping agent selected from inorganic phosphoric acids, phosphonic acids, organic phosphoric acid esters, salts of the acids and esters and polyvalent metal salts.

17. A method according to claim 16, wherein the topping agent is 2-phosphonobutane 1,2,4-tricarboxylic acid.

18. A method according to claim 16, wherein the topping agent is a molybdate containing compound.

19. A composition for providing a protective passive oxide film on the surface of a ferrous metallic part in contact with an aqueous solution with little or no attendant deposition of scale on the part, the composition comprising (A) a water soluble polymer comprising repeat unit moieties (a) and (b) wherein the repeat unit (a) comprises the structure

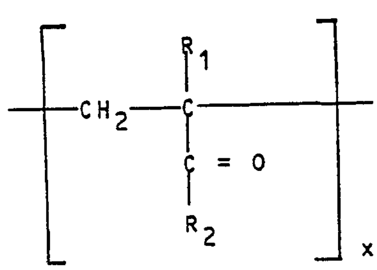

and wherein the repeat unit (b) comprises the structure

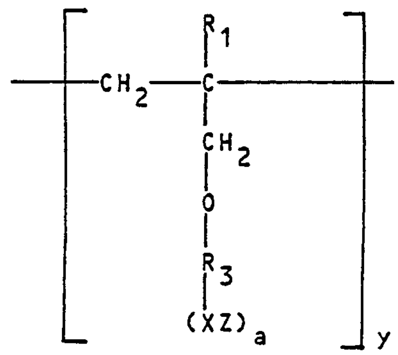

wherein x and y are integers, $R_1$ is H or lower alkyl ($C_1$—$C_3$), $R_2$ is OH, OM or $NH_2$, M is a water soluble cation, $R_3$ is a hydroxy substituted alkyl or alkylene radical having from 1 to 6 carbon atoms or a non-substituted alkyl or alkylene radical having from 1 to 6 carbon atoms, X is an anionic radical, Z is H or hydrogens or a water soluble cation or cations which together counterbalance the valence of X, and a is 0 or 1, and (B) a water soluble orthophosphate compound, the ratio on a weight basis of the polymer to the orthophosphate expressed as $PO_4^{-3}$ being from 1:8 to 4:1.

20. A composition according to claim 19, wherein the water soluble polymer comprises a third repeat unit moiety (c), the repeat unit (c) comprising a monomeric repeat unit selected from acrylic acid, alkyl acrylate, hydroxylated lower alkyl ($C_1$—$C_6$) acrylate, methacrylic acid, and acrylamide and water soluble salt forms thereof, with the proviso that repeat unit (a) and repeat unit (c) are different.

21. A composition according to claim 19 or 20, wherein $R_1$ is hydrogen, $R_2$ is OH or OM, $R_3$ is 2-hydroxypropylidene, X is $SO_3$ and Z is a member or members selected from H, Na, $NH_4^+$, Ca and K and wherein a is one.

22. A composition according to claims 19 to 21, wherein the molar ratio x:y is from 30:1 to 1:20.

23. A composition according to claim 22, wherein the number average molecular weight of the water soluble polymer is from 1,000 to 1,000,000 and wherein the molar ratio x:y is from 10:1 to 1:5.

**Patentansprüche**

1. Verfahren zum Kontrollieren der Abscheidung von Kalziumphosphat oder -phosphonat auf den Bauteilen eines einem wässrigen Medium ausgesetzten Systems, dadurch gekennzeichnet, dass man zu dem wässrigen Medium eine wirksame Menge eines wasserlöslichen Polymers zugibt, welches wiederkehrende Einheiten (a) und (b) aufweist, wobei die wiederkehrende Einheit (a)

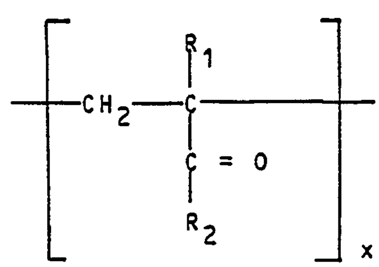

umfasst und wobei die wiederkehrende Einheit (b)

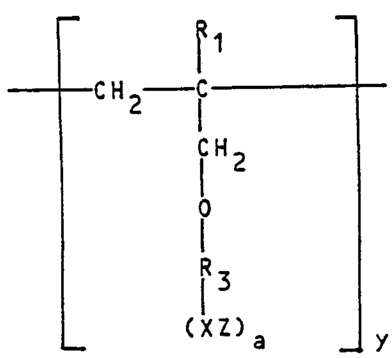

umfasst, worin x und y ganze Zahlen sind, $R_1$ H oder Niedrigalkyl ($C_{1-3}$) ist, $R_2$ OH, OM oder $NH_2$ ist, M ein wasserlösliches Kation ist, $R_3$ ein hydroxysubstituierter Alkyl- oder Alkylenrest mit 1 bis 6 Kohlenstoffatomen oder ein unsubstituierter Alkyl- oder Alkylenrest mit 1 bis 6 Kohlenstoffatomen ist, X ein anionischer Rest ist, Z H oder ein wasserlösliches Kation oder wasserlösliche Kationen, die zusammen die Wertigkeit von X haben, bedeutet, und a 0 oder 1 ist.

2. Verfahren gemäss Anspruch 1 zum Kontrollieren der Abscheidung von Kalziumphosphat auf Bauteilen eines einem wässrigen Medium ausgesetzten Systems, enthaltend Kalziumkationen und Phosphatanionen, unter abscheidungsbildenden Bedingungen.

3. Verfahren gemäss Anspruch 1 zum Kontrollieren der Abscheidung von Kalziumphosphat auf den Bauteilen eines einem wässrigen Medium ausgesetzten Systems, bei dem solche Abscheidungen auftreten können.

4. Verfahren gemäss einem der Ansprüche 1 bis 3, bei dem das wasserlösliche Polymer eine dritte wiederkehrende Einheit (c) umfasst, wobei die wiederkehrende Einheit (c) eine monomere wiederkehrende Einheit, ausgewählt aus Acrylsäure, Alkylacrylat, hyrdoxyliertem Niedrigalkyl ($C_{1-6}$)-acrylat, Methacrylsäure und Acrylamid und wasserlöslichen Salzformen davon ist, mit dem Proviso, dass die wiederkehrende Einheit (a) und die wiederkehrende Einheit (c) verschieden sind.

5. Verfahren gemäss einem der Ansprüche 1 bis 4, bei dem $R_1$ Wasserstoff, $R_2$ OH oder OM, $R_3$ 2-Hydroxypropyliden, X $SO_3$ und Z ein oder mehrere Glieder, ausgewählt aus H, Na, $NH_4^+$, Ca und K, ist und worin a 1 ist.

6. Verfahren gemäss einem der Ansprüche 1 bis 5, bei dem das Molverhaltnis x:y 30:1 bis 1:20 beträgt.

7. Verfahren gemäss Anspruch 6, bei dem das Zahlendurchschnitts-Molekulargewicht des wasserlöslichen Polymers 1000 bis 1 000 000 beträgt, das Molverhältnis x:y 10:1 bis 1:5 beträgt und das System ein Kühlwassersystem ist.

8. Verfahren gemäss einem der Ansprüche 1 bis 7, bei dem zusätzlich zu dem wässrigen Medium 1 bis 500 ppm eines Toppungsmittels, ausgewählt aus anorganischen Phosphorsäuren, Phosphonsäuren, organischen Phosphorsäureestern, Salzen der Säuren und Ester und mehrwertigen Metallsalzen zugegeben sind.

9. Verfahren gemäss Anspruch 8, bei dem das Toppungsmittel 2-Phosphonbutan-1,2,4-tricarboxylsäure ist.

10. Verfahren gemäss Anspruch 8, bei dem das Toppungsmittel eine Molybdat enthaltende Verbindung ist.

11. Verfahren zum Inhibieren der Korrosion von eisenhaltigen Metallteilen im Kontakt mit einer wässrigen Lösung, bei dem wenig oder keine begleitende Abscheidung eines Belages auf den Eisenteilen erfolgt, wobei die Korrosionsinhibierung dadurch erzielt wird, dass man die Bildung eines passiven Schutzoxidfilmes auf der Metalloberfläche im Kontakt mit dem wässrigen Medium vornimmt, wobei die Methode die Zugabe von (A) einem wasserlöslichen Polymer, umfassend wiederkehrende Einheiten (a) und (b), wobei die wiederkehrende Einheit (a) die Formel

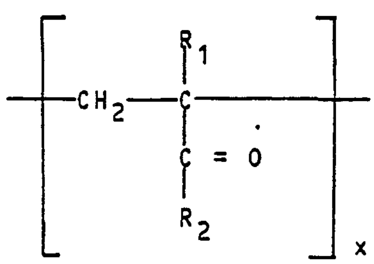

hat und worin die wiederkehrende Einheit (b) die Formel

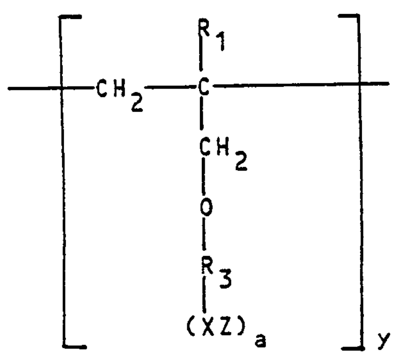

hat, worin x und y ganze Zahlen sind, $R_1$ H oder Niedrigalkyl ($C_{1-3}$), $R_2$ OH, OM oder $NH_2$ ist, M ein wasserlösliches Kation ist, $R_3$ ein hydroxysubstituierter Alkyl- oder Alkylenrest mit 1 bis 6 Kohlenstoffatomen oder

ein unsubstituierter Alkyl- oder Alkylenrest mit 1 bis 6 Kohlenstoffatomen ist, X ein anionischer Rest ist, Z H oder Wasserstoffatome oder ein wasserlösliches Kation oder wasserlösliche Kationen, die zusammen die Wertigkeit von X haben, ist, und a 0 oder 1 ist, und (B) eine wasserlösliche o-Phosphatverbindung umfasst, wobei das Polymer und die o-Phosphatverbindungen ausreichen, um einen im wesentlichen ablagerungsfreien, passiven Schutzoxidfilm auf der Metalloberfläche auszubilden.

12. Verfahren gemäss Anspruch 11, bei dem das wasserlösliche Polymer eine dritte wiederkehrende Einheit (c) umfasst, wobei die wiederkehrende Einheit (c) eine monomere wiederkehrende Einheit, ausgewählt aus Acrylsäure, Alkylacrylat, hydroxyliertem Niedrigalkyl ($C_{1-6}$)-acrylat, Methacrylsäure und Acrylamid und wasserlöslichen Salzformen davon ist und mit dem Proviso, dass die wiederkehrende Einheit (a) und die wiederkehrende Einheit (c) verschieden voneinander sind.

13. Verfahren gemäss Anspruch 11 oder 12, bei dem $R_1$ Wasserstoff, $R_2$ OH oder OM, $R_3$ 2-Hydroxypropyliden, X $SO_3$ und Z ein Glied oder mehrere Glieder, ausgewählt aus H. Na, $NH_4$, Ca und K, sind und worin a 1 ist.

14. Verfahren gemäss einem der Ansprüche 11 bis 13, bei dem das Molverhältnis x zu y 30:1 bis 1:20 beträgt.

15. Verfahren gemäss Anspruch 14, bei dem das Zahlendurchschnitts-Molekulargewicht, des wasserlöslichen Polymers 1000 bis 1 000 000 ist, das Molverhältnis x zu y 10:1 bis 1:5 ist und das wässrige Medium ein Kühlwassersystem ist.

16. Verfahren gemäss einem der Ansprüche 11 bis 15, bei dem man ausserdem zu dem wässrigen Medium 1 bis 500 ppm eines Toppungsmittels, ausgewählt aus anorganischen Phosphorsäuren, Phosphonsäuren, organischen Phosphorsäureestern, Salzen dieser Säure und Ester, und mehrwertige Metallsalze gibt.

17. Verfahren gemäss Anspruch 16, bei dem das Toppungsmittel 2-Phosphonbutan-1,2,4-tricarboxylsäure ist.

18. Verfahren gemäss Anspruch 16, bei dem das Toppungsmittel eine Molybdat enthaltende Verbindung ist.

19. Zusammensetzung zur Ausbildung eines passiven Schutzoxidfilmes auf der Oberfläche von eisenhaltigen Metallteilen, die in Kontakt mit einer wässrigen Lösung sind, wobei sich wenig oder keine Abscheidungen eines überzugs auf den Teilen ausbilden, wobei die Zusammensetzung umfasst (A) ein wasserlösliches Polymer, umfassend wiederkehrende Einheiten (a) und (b), worin die wiederkehrende Einheit (a) die Formel

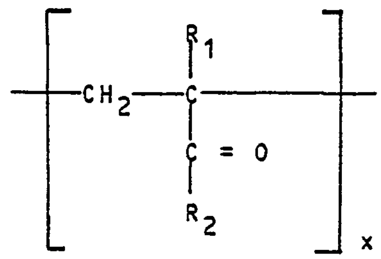

hat und die wiederkehrende Einheit (b) die Formel

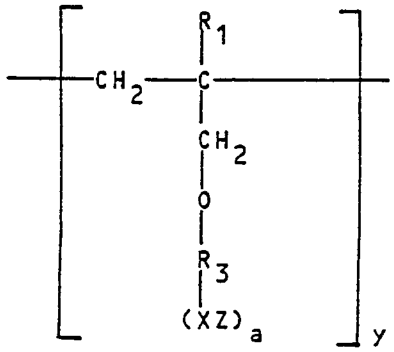

worin x und y ganze Zahlen sind, $R_1$ H oder Niedrigalkyl ($C_{1-3}$) ist, $R_2$ OH, OM oder $NH_2$ ist, M ein wasserlösliches Kation ist, $R_3$ ein hydroxysubstituierter Alkyl- oder Alkylenrest mit 1 bis 6 Kohlenstoffatomen oder ein unsubstituierter Alkyl- oder Alkylenrest mit 1 bis 6 Kohlenstoffatomen ist, X ein anionischer Rest ist, Z H oder Wasserstoffatome oder ein wasserlösliches Kation oder wasserlösliche Kationen, die zusammen die Wertigkeit von X haben, ist, und a 0 oder 1 ist, und (B) eine wasserlösliche o-Phosphatverbindung, wobei das Verhältnis auf einer Gewichtsbasis der Polymeren zu dem o-Phosphat, ausgedrückt als $PO_4^{-3}$, 1:8 bis 4:1 beträgt.

20. Zusammensetzung gemäss Anspruch 19, bei dem das wasserlösliche Polymer eine dritte wiederkehrende Einheit (c) umfasst und die wiederkehrende Einheit (c) eine monomere wiederkehrende Einheit, ausgewählt aus Acrylsäure, Alkylacrylat, hydroxyliertem Niedrigalkyl ($C_{1-6}$)-acrylat, Methacrylsäure oder Acrylamid und wasserlöslichen Salzformen davon ist, mit dem Proviso, dass die wiederkehrende Einheit (a) und die wiederkehrende Einheit (c) voneinander verschieden sind.

21. Zusammensetzung gemäss Anspruch 19 oder 20, in welcher $R_1$ Wasserstoff, $R_2$ OH oder OM, $R_3$ 2-Hydroxypropyliden, X $SO_3$ und Z ein Glied oder Glieder, ausgewählt aus H, Na, $NH_4^+$, Ca und K sind und worin a 1 ist.

22. Zusammensetzung gemäss Ansprüchen 19 bis 21, in welcher das Molverhältnis x zu y 30:1 bis 1:20 beträgt.

23. Zusammensetzung gemäss Anspruch 22, in welcher das Zahlendurchschnitts-Molekulargewicht des wasserlöslichen Polymers 1000 bis 1 000 000 beträgt und worin das Molverhaltnis x zu y 10:1 bis 1:5 ist.

**Revendications**

1. Une méthode de lutte contre le dépôt de phosphate ou de phosphonate de calcium sur les parties d'un dispositif du appareil qui sont en contact avec un milieu aqueux, méthode selon laquelle on ajoute au milieu aqueux une proportion efficace d'un polymère hydrosoluble comprenant les motifs itératifs (a) et (b) ci-dessous:

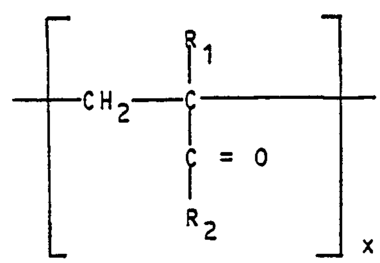

(a)

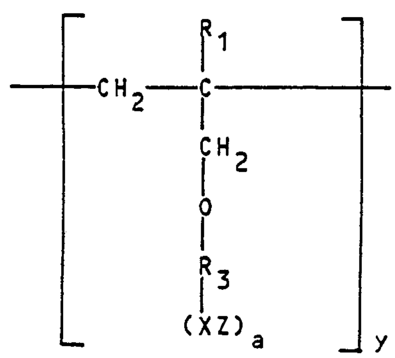

(b)

motifs dans lesquels x et y sont des entiers, $R_1$ désigne l'hydrogène ou un alkyle en $C_1$-$C_3$, $R_2$ un groupe OH, OM ou $NH_2$, M étant un cation soluble dans l'eau, $R_3$ un hydroxyalkyle ou -alkylène en $C_2$-$C_6$ ou bien un radical alkyle ou alkylène en $C_1$ à $C_6$ sans substituant, X représente un radical anionique, Z un ou deux atomes d'hydrogène ou bien un ou plusieurs cations solubles dans l'eau équilibrant la valence du radical X, et a est le nombre 0 ou 1.

2. Une méthode selon la revendication 1 contre le dépôt de phosphate de calcium sur les parties d'un dispositif ou appareil qui sont en contact avec un milieu aqueux contenant des cations calcium et des anions phsophate, surfaces qui sont exposées à des conditions de formation d'un tel dépôt.

3. Une méthode selon al revendication 1 contre le dépôt de phosphonate de calcium sur les parties d'un dispositif qui sont exposées à un milieu aqueux pouvant donner un tel dépôt.

4. Une méthode selon l'une quelconque des revendications 1 à 3 dans laquelle le polymère hydrosoluble comprend un troisième motif (c) choisi parmi l'acide acrylique, un acrylate d'alkyle ou d'hydroxyalkyle en $C_1$ à $C_6$, l'acide méthacrylique et l'acrylamide et leurs sels solubles dans l'eau, avec la condition que les motifs (a) et (c) soient différents.

5. Une méthode selon l'une quelconque des revendications 1 à 4 dans laquelle, dans les motifs indiqués, $R_1$ est l'hydrogène, $R_2$ le groupe OH ou OM, $R_3$ le groupe 2-hydroxypropylidène, X est le groupe $SO_3$ et Z représente un ou plusieurs éléments choisis parmi $H^+$, $Na^+$, $NH_4^+$, $Ca^{++}$ et $K^+$, a étant le nombre 1.

6. Une méthode selon l'une quelconque des revendications 1 à 5, le rapport molaire x:y étant compris entre 30:1 et 1:20.

7. Une méthode selon la revendication 6, la masse moléculaire en nombre du polymère hydrosoluble étant comprise entre 1 000 et 1 000 000 et le rapport molaire x:y entre 10:1 et 1:5, et le dispositif étant un dispositif à eau de refroidissement.

8. Une méthode selon l'une quelconque des revendications 1 à 7 dans laquelle on ajoute également au milieu aqueux de 1 à 500 ppm d'un agent renforcateur choisi parmi des acides phosphoriques minéraux, acides phosphoniques, esters d'acides phosphoriques, sels de ces acides et esters, et sels de métaux polyvalents.

9. Une méthode selon la revendication 8 dans laquelle l'agent renforcateur est l'acide 2-phosphonobutane-1,2,4-tricarboxylique.

10. Une méthode selon la revendication 8 dans laquelle l'agent renforcateur est un molybdate.

11. Une méthode pour inhiber la corrosion de surfaces de métaux ferreux qui sont en contact avec une solution aqueuse sans qu'il se forme en même temps, ou seulement peu, de dépôt de tartre sur ces surfaces, en formant une pellicule d'oxyde passive protectrice sur les surfaces en contact avec le milieu aqueux, méthode qui consiste à ajouter à ce milieu (A) un polymère hydrosoluble qui comprend les motifs (a) et (b) ci-dessous:

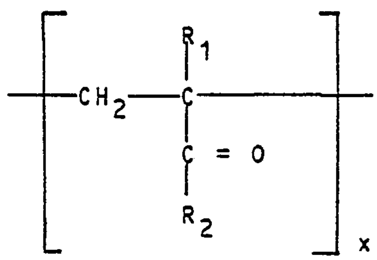

(a)

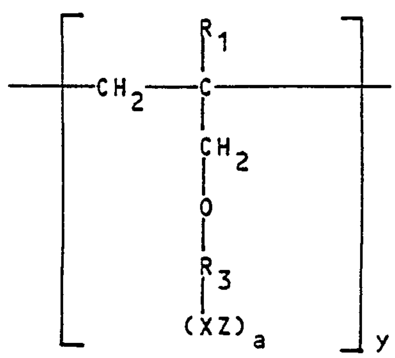

(b)

motifs dans lesquels x et y sont des entiers, $R_1$ désigne l'hydrogène ou un alkyle en $C_1$-$C_3$, $R_2$ un groupe OH, OM ou $NH_2$, M étant un cation soluble dans l'eau, $R_3$ un hydroxyalkyle ou -alkylène en $C_1$-$C_6$ ou bien un radical alkyle ou alkylène en $C_1$ à $C_6$ sans substituant, X représente un radical anionique, Z un ou deux atomes d'hydrogène ou bien un ou plusieurs cations solubles dans l'eau équilibrant la valence du radical X, et a est le nombre 0 ou 1, et (B) un orthophosphate soluble dans l'eau, le polymère et l'orthophosphate suffisant à former sur la surface métallique une pellicule d'oxyde passive protectrice pratiquement sans tartre.

12. Une méthode selon la revendication 11 dans laquelle le polymère hydrosoluble comprend un troisième motif (c) choisi parmi l'acide acrylique, un acrylate d'alkyle ou d'hydroxyalkyle en $C_1$ à $C_6$, l'acide méthacrylique et l'acrylamide et leurs sels solubles dans l'eau, avec la conditions que les motifs (a) et (c) soient différents.

13. Une méthode selon la revendication 11 ou 12 dans laquelle, dans les motifs indiqués, $R_1$ est l'hydrogène, $R_2$ le groupe OH ou OM, $R_3$ un groupe 2-hydroxypropylidène, X le groupe $SO_3$ et Z représente un ou plusieurs éléments choisis parmi H, Na, $NH_4$, Ca et K, a étant le nombre 1.

14. Une méthode selon l'une quelconque des revendications 11 à 13, le rapport molaire x:y étant compris entre 30:1 et 1:20.

15. Une méthode selon la revendication 14, la masse moléculaire moyenne en nombre du polymère hydrosoluble étant comprise entre 1 000 et 1 000 000 et le rapport molaire x:y entre 10:1 et 1:5, et le milieu aqueux étant une eau de refroidissement.

16. Une méthode selon l'une quelconque des revendications 11 à 15 dans laquelle on ajoute également au milieu aqueux de 1 à 500 pm d'un agent renforcateur choisi parmi des acides phosphotriques minéraux, acides phosphoniques, esters d'acides phosphoriques, sels de ces acides et esters, et sels de métaux polyvalente.

17. Une méthode selon la revendication 16 dans laquelle l'agent renforcateur est l'acide 2-phosphonobutane-1,2,4-tricarboxylique.

18. Une méthode selon la revendication 16 dans laquelle l'agent reforcateur est un molybdate.

19. Une composition pour former une pellicule d'oxyde passive protectrice sur la surface d'une partie métallique ferreuse en contact avec une solution aqueuse sans qu'il se forme en même temps, ou seulement peu, de dépôt de tartre sur cette surface, composition qui comprend (A) un polymère hydrosoluble comportant les motifs itératifs (a) et (b) ci-dessous:

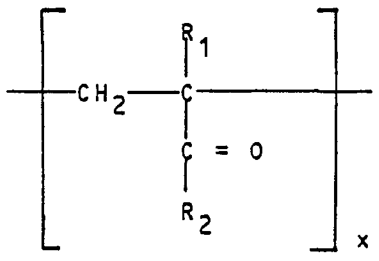

(a)

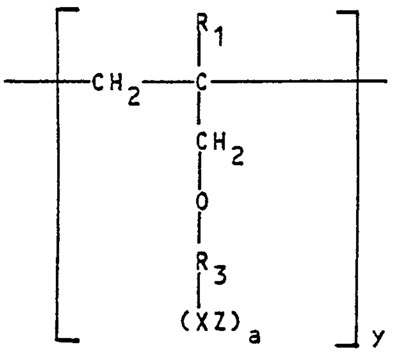

(b)

motifs dans lesquels x et y sont des entiers, $R_1$ désigne l'hydrogène ou un alkyle en $C_1$-$C_3$, $R_2$ un groupe OH, OM ou $NH_2$, M étant un cation soluble dans l'eau, $R_3$ un hydroxyalkyle ou -alkylène en $C_1$-$C_6$ ou bien un radical alkyle ou alkylène en $C_1$ à $C_6$ sans substituant, X représente un radical anionique, Z un ou deux atomes d'hydrogène ou bien un ou plusieurs cations solubles dans l'eau équilibrant la valence du radical X, et a est le nombre 0 ou 1, et (B) un orthophosphate soluble dans l'eau, le rapport pondéral du polymère à l'orthophosphate en $PO_4^{-3}$ étant compris entre 1:8 et 4:1.

20. Une composition selon la revendication 19 dans laquelle le polymère hydrosoluble comprend un troisième motif (c) choisi parmi l'acide acrylique, un acrylate d'alkyle ou d'hydroxyalkyle en $C_1$ à $C_6$, l'acide méthacrylique et l'acrylamide et leurs sels solubles dans l'eau, avec la condition que les motifs (a) et (c) soient différents.

21. Une composition selon la revendication 19 ou 20 dans laquelle, dans les motifs indiqués, $R_1$ est l'hydrogène, $R_2$ le groupe OH ou OM, $R_3$ le groupe 2-hydroxypropylidène, X le groupe $SO_3$ et Z représente un ou plusieurs éléments choisis parmi H, Na, $NH_4$, CA et K, a étant la nombre 1.

22. Une composition selon l'une quelconque des revendications 19 à 21, dans laquelle le rapport molaire x:y est compris entre 30:1 et 1:20.

23. Une composition selon la revendication 22 dans laquelle le masse moléculaire moyenne en nombre du polymère hydrosoluble est comprise entre 1 000 et 1 000 000 et le rapport molaire x:y entre 10:1 et 1:5.